Europäisches Patentamt

European Patent Office

Office européen des brevets

(11) Publication number: **0 277 414 B1**

# EUROPEAN PATENT SPECIFICATION

(45) Date of publication of patent specification: **30.09.92**   (51) Int. Cl.⁵: **G11B 5/60**

(21) Application number: **87309130.0**

(22) Date of filing: **15.10.87**

(54) **Self-loading gas bearing slider.**

(30) Priority: **05.02.87 US 11655**

(43) Date of publication of application:
**10.08.88 Bulletin 88/32**

(45) Publication of the grant of the patent:
**30.09.92 Bulletin 92/40**

(84) Designated Contracting States:
**DE FR GB**

(56) References cited:
EP-A- 0 071 249   EP-A- 0 107 411
EP-A- 0 238 727   US-A- 3 855 625
US-A- 4 644 641   US-A- 4 785 161

**PATENT ABSTRACTS OF JAPAN, vol. 9, no. 259 (P-397)(1982), 17 October 1985 ; & JP-A-60199073, 14.06.1985**

(73) Proprietor: **SEAGATE TECHNOLOGY INTERNA-TIONAL**
**c/o Maples & Calder, P.O. Box 309**
**Georgetown, Grand Cayman Island(KY)**

(72) Inventor: **Strom, Richard Albert**
**4755 Eriks Blvd.**
**Eagan Minnesota 55412(US)**

(74) Representative: **Miller, Joseph et al**
**J. MILLER & CO. 34 Bedford Row, Holborn**
**London WC1R 4JH(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to self-loading air bearing sliders for magnetic head assemblies.

Magnetic head assemblies that fly relative to magnetic disks have been used extensively. The objectives for improving the transducing relationship between the magnetic head assembly and a magnetic disk include a close spacing between the magnetic head assembly and the disk, and to maintain such spacing at a constant flying height. Close spacing, when used with very narrow transducing gaps and very thin magnetic recording films, allows short wave-length, high-frequency signals to be recorded, thereby affording high density, high storage capacity recording.

In accessing disks, for example, the flying height of a magnetic head assembly varies as the magnetic head assembly is moved radially to different data tracks because the angular velocity of the rotating disk at the outer tracks is greater than that at the inner tracks. Maintaining a near constant flying height over the surface of the disk is desirable because it allows the average flying height from inner to outer radius to be reduced thus allowing a higher storage density without reducing reliability.

One way of providing for a near constant flying height is to use a self-loading negative pressure air bearing slider. By providing a negative pressure air bearing slider as described in US-A-4,475,135 differences in air track speed between an inner and outer track on a rotating disk cause compensating changes in the positive and negative pressures on the air bearing slider which result in a near constant flying height.

The manufacture of a negative pressure air bearing slider designed to fly at very low flying heights relative to the surface of a disk is difficult. A process which provides repeatable, physical dimensions of the negative pressure air bearing a slider and employs a laser is disclosed in US-A-4,785,161, whose contents were known to the inventor before the priority date of the present application, but which was not published until later. In that process, machining by various means must be made to a trailing edge of the air bearing slider. The machining employed must remove material from a thin film magnetic transducer assembly.

The present invention seeks to provide a self-loading gas bearing slider which eliminates the need to machine material from a thin film magnetic transducer assembly.

A magnetic head slider is disclosed in EP-A-0,071,249, which slider comprises a body having leading and trailing edges, two side edges and a gas bearing surface, wherein the gas bearing surface is adapted to ride on gas flowing from the leading to the trailing edge, the gas outside the gas bearing surface having an ambient pressure, a negative pressure recess having two side edges and a negative pressure surface of predetermined depth relative to the gas bearing surface, the pressure in the negative pressure recess being negative relative to ambient pressure as gas flows across the gas bearing surface, the side edges of the negative pressure recess having leading and trailing ends, pressure-reducing inclined grooves formed in the gas bearing surface and communicating between the side edges of the negative pressure recess and the slider side edges. The two or more inclined grooves in each side of the slider act as vent means starting upstream of the trailing ends of the side edges of the negative pressure recess. Thus there is a volume of air in the negative pressure recess at the trailing end thereof which lies between the trailing ends of the side edges and downstream of the start of the most rearward inclined groove, because the start of the rearward groove does not terminate the trailing side of the negative pressure recess.

EP-A-0,238,727 was published after the priority date of the present appplication, but has earlier filing and priority dates. It is accordingly relevant to the novelty, but not the inventive step, of the invention claimed in this case. EP-A-0,238,727 discloses a self-loading gas bearing slider having leading and trailing edges, two side edges and a gas bearing surface, wherein the gas bearing surface is adapted to ride on gas flowing from the leading to the trailing edge, the gas outside the gas bearing surface having an ambient pressure, a negative pressure recess having two side edges and a negative pressure surface of pre-determined depth relative to the gas bearing surface, the pressure in the negative pressure recess being negative relative to the ambient pressure as gas flows across the gas bearing surface, the side edges of the negative pressure recess having leading and trailing ends, an air purge channel across the slider just upstream of a back bar forming the trailing end of the negative pressure recess. The air purge channel is of a depth slightly greater than the pre-determined depth of the negative pressure recess and forms vent means communicating between the side edges of the negative pressure recess and the slider side edges.

According to one aspect of the invention, there is provided a self-loading gas bearing slider comprising a slider having leading and trailing edges, two side edges and a gas bearing surface, wherein the gas bearing surface is adapted to ride on gas flowing from the leading to the trailing edge, the gas outside the gas bearing surface having an ambient pressure, a negative pressure recess having two side edges and a negative pressure surface of pre-determined depth relative to the gas bearing surface, the pressure in the negative pressure recess being negative relative to ambient pressure as gas flows across the gas bearing surface, the side edges of the negative pressure recess having leading and trailing ends, vent means communicating between the side edges of the negative pressure recess and the slider side edges, the vent means comprising inclined recesses in the gas bearing surface, the direction of inclination being such that an inclined recess communicates with the slider side edge at a position which is further from the leading edge of the slider than the position at which the inclined recess communicates with the side edge of the negative pressure recess, characterised in that the vent means consists of one pair of inclined recesses which communicate between the trailing end of respective side edges of the negative pressure recess and a corresponding one of the slider side edges, that the inclined recesses have a depth equal to the pre-determined depth, and that the inclined recesses have a sufficiently large cross section so that when the slider is riding on a gas bearing, gas flows through the inclined recesses without significant restriction.

Preferably, a trailing edge cross rail is disposed rearwards of the side vents across the full width of the slider body.

Advantageously, the leading face of the cross rail is inclined in the same directions as the side vents and at the same angles.

To relieve positive pressure from the surface of the side rail adjacent to and ahead of the side vent, a notch is disposed in each side rail of the gas bearing surface in close proximity to, and ahead of, the adjacent side vent.

According to another aspect of the invention, there is provided a self-loading gas bearing slider comprising a slider having leading and trailing edges, two side edges and a gas bearing surface, wherein the gas bearing surface is adapted to ride on gas flowing from the leading edge to the trailing edge, the gas outside the gas bearing surface having an ambient pressure, a negative pressure recess having two side edges and a negative pressure surface of pre-determined depth relative to the gas bearing surface, the pressure in the recess being negative relative to ambient pressure as gas flows across the gas bearing surface, the side edges of the negative pressure recess having leading and trailing ends, a vent means communicating between each side edge of the negative pressure recess and the corresponding side edge of the slider, characterised in that the vent means is a groove terminating the tracking side of the negative pressure recess and has a depth greater than the pre-determined depth, that the vent means has a sufficiently large cross section so that when the slider is riding on a gas bearing, gas flows through the vent means without significant restriction, and that a notch is disposed in each side rail of the gas bearing surface in close proximity to, and ahead of, the adjacent vent means to relieve positive pressure from the surface of the side rail adjacent to and ahead of the vent means.

Preferably, in operation, the slider rides upon a gas bearing between the gas bearing surface and a confronting planar surface at a substantially constant flying height, the flying height relative to said confronting planar surface is in the range of $8 \times 10^{-5}$ to $2.8 \times 10^{-4}$ mm ($3 \times 10^{-6}$ to $1.1 \times 10^{-5}$ inch).

The negative pressure recess may have a depth relative to the surfaces of the rails of $5 \times 10^{-4}$ to $3 \times 10^{-2}$ mm ($2 \times 10^{-5}$ to $1.2 \times 10^{-3}$ inch).

Where there is a trailing edge cross rail, it may comprise a plurality of transducer elements for addressing tracks on the confronting planar surface. The cross rail may provide a full width close proximity sensor of media roughness on the confronting planar surface.

Preferably the positive pressure and negative pressure regions provide a net load of substantially zero across the surface of the body.

It is to be noted that the use of the terms "positive pressure" and "negative pressure" in this specification means pressure relative to ambient pressure. The ambient gas need not be air but refers to the gas medium surrounding the gas bearing slider.

Preferably a self-loading gas bearing slider according to the present invention provides good stability by having a high stiffness requiring a large force to move it in an up or down direction, retains the characteristics of a near constant flying height, and does not require machining in the region of the transducer assembly.

The invention is illustrated, merely by way of example, in the accompanying drawings, in which:-

Figure 1 is a perspective view of a known negative pressure air bearing slider;

Figure 2 is a top plan view of one embodiment of a self-loading gas bearing slider according to the present invention;

Figure 2A is a scrap perspective view of a trailing corner of the slider of Figure 2;

Figures 3 is a top plan view of another embodiment of a self-loading gas bearing slider according to the present invention; and

Figure 4 is a graph showing both flying height and slope versus disk speed for self-loading gas bearing sliders according to the present invention.

Throughout the drawings like parts have been designated by the same reference numerals.

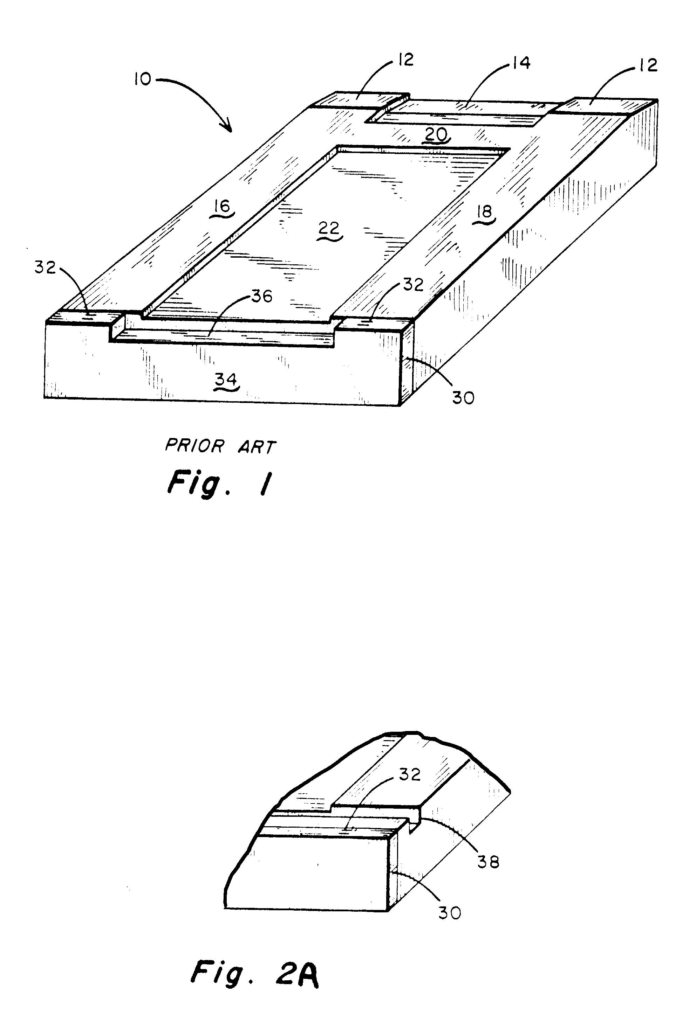

Figure 1 shows a known negative pressure air bearing slider 10 formed from a substantially rectangular block of ceramic material such as ferrite. The slider 10 is shown having a body with a leading edge taper 12 and a stepped leading cavity 14. Side rails 16,18 extend along the length of the body of the air bearing slider.

Connecting the side rails is a cross rail 20. The side rails and the cross rail form a substantially coplanar surface. The three rails enclose a recessed cavity 22 which forms a trailing cavity. At the trailing edge of the body of the air bearing slider is a thin film transducer assembly 30. This transducer assembly can be integrally formed on the body of the air bearing slider or be attached by glue or glass bonding prior to machining of a surface of the air bearing slider. Pole tips 32 are the transducer elements for which a close disk spacing is desired. The pole tips lie in the same plane as the side rails 16,18.

The leading and trailing cavities can be machined, chemically etched, formed by ion milling, or preferably laser machined as disclosed in US-A-4,785,161. In laser machining, particularly with a Nd:YAG laser, ceramic materials like ferrite and aluminium oxide/titanium carbide composites are easily machined whereas thin film deposits of pure aluminium oxide do not as easily absorb the laser energy and vapourise. An oxide layer 32 used for encapsulation of the thin film transducer assembly 30 tends to chip or crack easily and thus is not compatible with laser machining under the same operationing conditions useful for the ceramic materials. In the known negative pressure air bearing slider of Figure 1, the oxide and other materials have been removed in the area indicated by reference numeral 36, so that any ceramic material need be machined at the time the recessed cavity 22 is formed. The selective removal of the oxide layer 34 requires a separate photomask operation followed by chemical etching, ion milling, or reverse mask lift-off of the area 36.

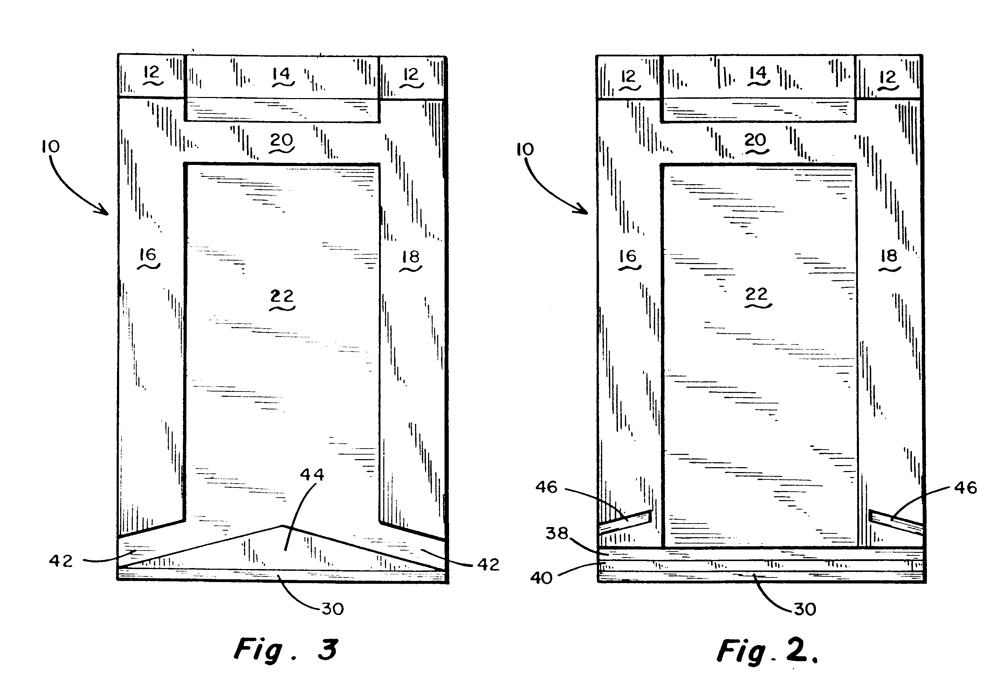

Figure 2 shows a self-loading air bearing slider 10 according to the present invention. Like parts in Figures 1 and 2 have been designated by the same reference numerals and will not be described in further detail. Machined near the trailing edge of the body of the air bearing slider 10 is a side vent groove 38. The side vent groove must be sufficiently large so that when the air bearing slider is flying above a magnetic disk, the air that passes between the air bearing slider and the surface of the magnetic disk can freely flow to either side of the air bearing slider through the side vent groove 38, and the negative pressure within the recessed cavity 22 would not be affected. The minimum size for the side vent groove 38 is of the order of 0.10mm (0.004 inch) in width by about 0.05mm (0.002 inch) in depth. The actual cross sectional shape of the side vent groove 38 need not be rectangular. The primary requirement is that its cross sectional area be sufficient so that air flow within in it is not significantly restricted. Rearward of the side vent groove is a trailing edge cross rail 40 which is made up of a sufficient portion of the body of the air bearing slider 10 adjacent to the transducer assembly 30 to support it mechanically. The width of the trailing edge cross rail 40 is kept to a minimum, being approximately 0.08mm (0.003 inch) to 0.13mm (0.005 inch) wide to retain known desirable features of a negative pressure air bearing slider. The surface of the trailing edge cross rail 40, and the pole tips 32 are coplanar with the side rails 16,18 and the cross rail 20.

The slider also has a deep side vent notch 46 in each side rail 16,18 to aid in the reduction of positive pressure from going into the side vent groove 38. Positioning of the notches 46 relative to the side vent groove 38 also offers some control in the balance of positive and negative forces on the air bearing slider which affect the flying height versus speed response of the air bearing slider. The side vent notch 46 reduces the positive pressure of the side rails before the positive pressure reaches the side vent groove 38. This can help the side vent groove in providing a sub-ambient pressure within the recessed cavity 22.

The use of the side vent groove 38 avoids the need for the selective removal of the oxide layer 34 from the transducer assembly 30 as shown by the area 36 while preserving the basic characteristics of the negative pressure air bearing slider. The self-loading air bearing slider of Figure 2 can be cut by a laser with no damage to the transducer assembly 30. Since the trailing edge is not cut there is no need to tilt the parts or perform a double alignment of the air bearing slider during machining. The entire trailing edge flies at close proximity to a magnetic disk and that provides more area for multiple head transducer structures. The design does not preclude the use of ion milling or chemical etching in the manufacturing process of the air bearing slider. It is expected that the side vent groove 38 may be also implemented by conventional diamond saw cutting methods. Since the entire width of the trailing edge of the air bearing slider can be made to fly in close proximity to the surface of the disk, this design can be more effective in a media screening test (referred to as a Flying Integrity Test or FIT test) as a low flying detector of bumps, asperites or imperfections on the surface of a magnetic disk.

Shown in Figure 3 is an alternative embodiment of a self-loading air bearing slider according to the present invention where the recessed cavity 22 has angled side vent openings 42 and a triangular trailing edge cross rail or bar 44. The vent openings 42 may be tapered and the actual angles and break points may vary over a wide range. Figure 3 shows the width of each side vent 42 being greater than the width of the side vent groove 38 shown in Figure 2, but having a depth the same as that of the recessed cavity 22. This embodiment may provide greater ease of processing.

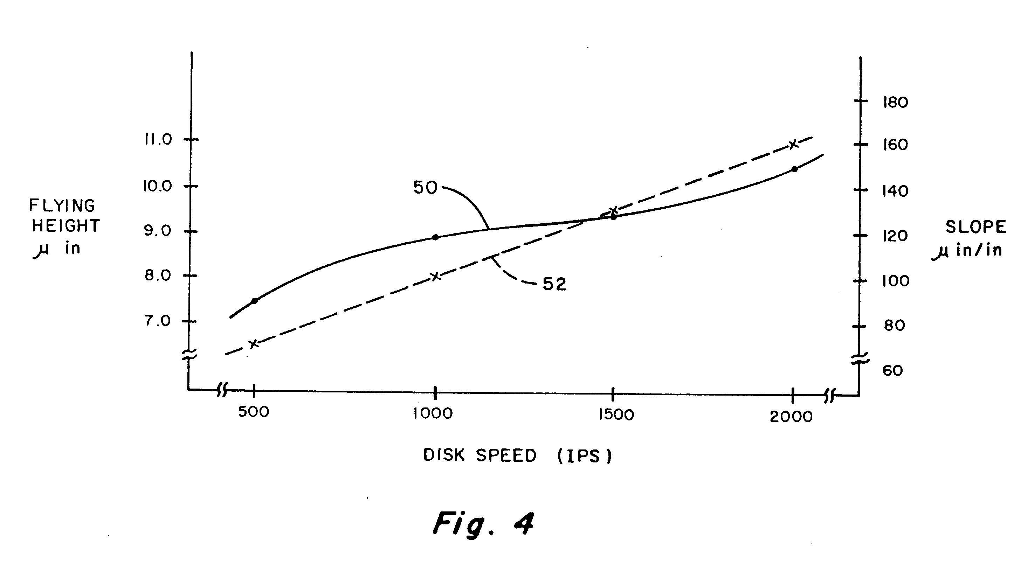

Figure 4 illustrates by curve 50 the near constant flying height of a self-loading air bearing slider according to the present invention at different speeds of rotation of a magnetic disk. Curve 52 shows the slope of the slider as a function of speed of the rotation of the disk. The slope or pitch defined on the right vertical axis is a measure of the difference in flying height of the leading edge over the trailing edge for the air bearing slider given in microinches per inch ($\mu$in/in). The results shown in Figure 4 are for an air bearing slider having the construction shown in Figure 2 with the side vent being 0.24mm (0.0096 inch) wide and approximately 0.05mm (0.002 inch) deep.

What has been developed is a self-loading air bearing slider for supporting a transducer assembly which air bearing slider can be easily machined and manufactured yet retains the desired features of a negative pressure air bearing slider having near constant disk to transducer assembly flying height over a wide range of disk speeds.

## Claims

1. A self-loading gas bearing slider comprising a slider (10) having leading and trailing edges, two side edges and a gas bearing surface, wherein the gas bearing surface is adapted to ride on gas flowing from the leading to the trailing edge, the gas outside the gas bearing surface having an ambient pressure, a negative pressure recess (22) having two side edges and a negative pressure surface of pre-determined depth relative to the gas bearing surface, the pressure in the negative pressure recess being negative relative to ambient pressure as gas flows across the gas bearing surface, the side edges of the negative pressure recess (22) having leading and trailing ends, vent means (42) communicating between the side edges of the negative pressure recess (22) and the slider side edges, the vent means comprising inclined recesses in the gas bearing surface, the direction of inclination being such that an inclined recess communicates with the slider side edge at a position which is further from the leading edge of the slider than the position at which the inclined recess communicates with the side edge of the negative pressure recess, characterised in that the vent means consists of one pair of inclined recesses (42) which communicate between the trailing end of respective side edges of the negative pressure recess and a corresponding one of the slider side edges, that the inclined recesses have a depth equal to the predetermined depth, and that the inclined recesses have a sufficiently large cross section so that when the slider is riding on a gas bearing, gas flows through the inclined recesses without significant restriction.

2. A slider as claimed in claim 1, including a trailing edge cross rail (44) disposed rearwards of the side vents (42) across the full width of the slider body.

3. A slider as claimed in claim 2, wherein the leading face of the cross rail (44) is inclined in the same directions as the side vents (42) and at the same angles.

4. A slider as claimed in any preceding claim, including a notch (46) disposed in each side rail (16, 18) of the gas bearing surface in close proximity to, and ahead of, the adjacent side vent (42) to relieve positive pressure from the surface of the side rail adjacent to and ahead of the side vent.

5. A self-loading gas bearing slider comprising a slider (10) having leading and trailing edges, two side edges and a gas bearing surface, wherein the gas bearing surface is adapted to ride on gas flowing from the leading edge to the trailing edge, the gas outside the gas bearing surface having an ambient pressure, a negative pressure recess (22) having two side edges and a negative pressure surface of predetermined depth relative to the gas bearing surface, the pressure in the recess (22) being negative relative to ambient pressure as gas flows across the gas bearing surface, the side edges of the negative pressure recess having leading and trailing ends, a vent means (38) communicating between each side edge of the negative pressure recess and the corresponding side edge of the slider, characterised in that the vent means (38) is a groove terminating the trailing side of the negative pressure recess (22) and has a depth greater than the pre-determined depth, that the vent means has a sufficiently large cross section so that when the slider is riding on a gas bearing, gas flows through the vent means without significant restriction, and that a notch (46) is disposed in each side rail (16, 18) of the gas bearing surface in close proximity to, and ahead of, the adjacent vent means to relieve positive pressure from the surface of the side rail adjacent to and ahead of the vent means.

6. A slider as claimed in any preceding claim, wherein, in operation, the slider rides upon a gas bearing between the gas bearing surface and a confronting planar surface at a substantially constant flying height, and the flying height relative to said confronting planar surface is in the range of $8 \times 10^{-5}$ to $2.8 \times 10^{-4}$ mm ($3 \times 10^{-6}$ to $1.1 \times 10^{-5}$ inch).

7. A slider as claimed in any preceding claim, wherein the negative pressure recess (22) has a depth relative to the surfaces of the rails (16, 18, 20) of $5 \times 10^{-4}$ to $3 \times 10^{-2}$ mm ($2 \times 10^{-5}$ to $1.2 \times 10^{-3}$ inch).

8. A slider as claimed in claim 2, or any claim appendant to claim 2, wherein the trailing edge cross rail (44) comprises a plurality of transducer elements (32) for addressing tracks on the confronting planar surface.

9. A slider as claimed in claim 5, or any claim appendant to claim 5, wherein a trailing edge cross rail (40) is disposed rearwards of the side vents (38) across the full width of the slider body, and comprises a plurality of transducer elements (32) for addressing tracks on the confronting planar surface.

10. A slider as claimed in claim 8 or 9, wherein the trailing edge cross rail (40; 44) provides a full width close proximity sensor of media roughness on the confronting planar surface.

11. A slider as claimed in any preceding claim, wherein the positive pressure and negative pressure regions provide a net load of substantially zero across the surface of the body.

**Patentansprüche**

1. Selbstbelastender Gaslager-Gleiter mit einem Gleiter (10), der vorlaufende und nachlaufende Kanten, zwei Seitenkanten und eine Gaslager-Oberfläche aufweist, die so ausgebildet ist, daß sie auf von der vorlaufenden zur nachlaufenden Kante strömendem Gas läuft, wobei das Gas außerhalb der Gaslager-Oberfläche einen Umgebungsdruck aufweist, mit einer Unterdruck-Ausnehmung (22), die zwei Seitenkanten und eine Unterdruck-Oberfläche mit vorgegebener Tiefe bezüglich der Gaslager-Oberfläche aufweist, wobei der Druck in der Unterdruck-Ausnehmung bezüglich des Umgebungsdruckes negativ ist, während Gas über die Gaslager-Oberfläche strömt, und die Seitenkanten der Unterdruck-Ausnehmung (22) vorlaufende und nachlaufende Enden aufweisen, und mit einer Belüftungseinrichtung (42), die eine Verbindung zwischen den Seitenkanten der Unterdruck-Ausnehmung (22) und den Seitenkanten des Gleiters herstellt und geneigte Ausnehmungen in der Gaslager-Oberfläche umfaßt, wobei die Neigungsrichtung derart ist, daß eine geneigte Ausnehmung mit der Seitenkante des Gleiters an einer Position in Verbindung steht, die von der vorlaufenden Kante des Gleiters weiter entfernt ist, als die Position, an der die geneigte Ausnehmung mit der Seitenkante der Unterdruck-Ausnehmung in Verbindung steht,
dadurch **gekennzeichnet,** daß die Belüftungseinrichtung aus einem Paar von geneigten Ausnehmungen (42) besteht, die eine Verbindung zwischen dem nachlaufenden Ende jeweiliger Seitenkanten der Unterdruck-Ausnehmung und einer entsprechenden der Gleiter-Seitenkanten herstellen, daß die geneigten Ausnehmungen eine Tiefe aufweisen, die gleich der vorgegebenen Tiefe ist, und daß die geneigten Ausnehmungen einen ausreichend großen Querschnitt derart aufweisen, daß, wenn der Gleiter auf einem Gaslager läuft, Gas durch die geneigten Ausnehmungen ohne wesentliche Drosselung strömt.

2. Gleiter nach Anspruch 1, unter Einschluß eines an der nachlaufenden Kante angeordneten Quersteges (44), der rückwärtig von den seitlichen Belüftungsöffnungen (42) über die volle Breite des Gleiterkörpers angeordnet ist.

3. Gleiter nach Anspruch 2, bei dem die vorlaufende Stirnfläche des Quersteges (44) in den gleichen Richtungen und unter den gleichen Winkeln geneigt ist, wie die seitlichen Belüftungseinrichtungen (42).

4. Gleiter nach einem der vorhergehenden Ansprüche, unter Einschluß einer Nut (46), die in jedem Seitensteg (16,18) der Gaslager-Oberfläche in enger Nähe zu und vorwärts von der benachbarten seitlichen Belüftungseinrichtung (42) angeordnet ist, um den Überdruck von der Oberfläche des Seitensteges benachbart zu und vor der seitlichen Belüftungseinrichtung abzuschwächen.

5. Selbstbelastender Gaslager-Gleiter mit einem Gleiter (10), der vorlaufende und nachlaufende Kanten, zwei Seitenkanten und eine Gaslageroberfläche aufweist, die so ausgebildet ist, daß sie auf einem von der vorlaufenden Kante zur nachlaufenden Kante strömenden Gas läuft, wobei das Gas außerhalb der Gaslager-Oberfläche einen Umgebungsdruck aufweist, mit einer Unterdruck-Ausnehmung (22), die zwei Seitenkanten und eine Unterdruck-Oberfläche mit vorgegebener Tiefe bezüglich der Gaslager-Oberfläche aufweist, wobei der Druck in der Ausnehmung (22) bezüglich des Umgebungsdruckes negativ ist, wenn Gas über die Gaslager-Oberfläche strömt, wobei die Seitenkanten der Unterdruck-Ausnehmung vorlaufende und nachlaufende Enden aufweisen, und mit einer Belüftungseinrichtung (38), die eine Verbindung zwischen jeder Seitenkante der Unterdruck-Ausnehmung und der entsprechenden Seitenkante des Gleiters herstellt, dadurch **gekennzeichnet,** daß die Belüftungseinrichtung (38) eine Nut ist, die die nachlaufende Seite der Unterdruckausnehmung (22) abschließt und eine Tiefe aufweist, die größer als die vorgegebene Tiefe ist, daß die Belüftungseinrichtung einen ausreichend großen Querschnitt aufweist, derart, daß, wenn der Gleiter auf einem Gaslager läuft, Gas durch die Belüftungseinrichtung ohne wesentliche Drosselung strömt, und daß eine Nut (46) in jedem Seitensteg (16,18) der Gaslager-Oberfläche in enger Nähe zu und vor der benachbarten Belüftungseinrichtung angeordnet ist, um einen Überdruck von der Oberfläche des Seitensteges benachbart zu und vorwärts von der Belüftungseinrichtung abzuschwächen.

6. Gleiter nach einem der vorhergehenden Ansprüche, bei dem im Betrieb der Gleiter auf ein Gaslager zwischen der Gaslager-Oberfläche und einer gegenüberstehenden ebenen Oberfläche in einer im wesentlichen konstanten Flughöhe läuft und bei dem die Flughöhe gegenüber der gegenüberstehenden ebenen Oberfläche im Bereich von $8 \times 10^{-5}$ bis $2,8 \times 10^{-4}$ mm ($3 \times 10^{-6}$ bis $1,1 \times 10^{-5}$ Zoll) liegt.

7. Gleiter nach einem der vorhergehenden Ansprüche, bei dem die Unterdruckausnehmung (22) eine Tiefe bezüglich der Oberfläche der Stege (16,18,20) aufweist, die $5 \times 10^{-4}$ bis $3 \times 10^{-2}$ mm ($2 \times 10^{-5}$ bis $1,2 \times 10^{-3}$ Zoll) beträgt.

8. Gleiter nach Anspruch 2 oder irgendeinem auf Anspruch 2 zurückbezogenen Anspruch, bei dem der Quersteg (44) der nachlaufenden Kante eine Vielzahl von Wandlerelementen (32) zur Adressierung von Spuren auf der gegenüberstehenden ebenen Oberfläche umfaßt.

9. Gleiter nach Anspruch 5 oder einem auf Anspruch 5 zurückbezogenen Anspruch, bei dem ein an der nachlaufenden Kante angeordneter Quersteg (40) rückwärts von den seitlichen Belüftungseinrichtungen (38) über die volle Breite des Gleiterkörpers angeordnet ist und eine Vielzahl von Wandlerelementen (32) zur Adressierung von Spuren auf der gegenüberstehenden ebenen Oberfläche umfaßt.

10. Gleiter nach Anspruch 8 oder 9, bei dem der an der nachlaufenden Kante angeordnete Quersteg (40;44) einen sich über die volle Breite erstreckenden Meßfühler für eine enge Annäherung für Aufzeichnungsmedium-Rauhigkeit auf der gegenüberstehenden ebenen Oberfläche bildet.

11. Gleiter nach einem der vorhergehenden Ansprüche, bei dem die Überdruck- und Unterdruckbereiche eine resultierende Belastung von im wesentlichen Null über die Oberfläche des Körpers ergeben.

**Revendications**

1. Pièce coulissante à coussin de gaz à chargement automatique (10) ayant des bords d'attaque et de fuite, deux bords latéraux et une surface à coussin gazeux, dans laquelle la surface à coussin gazeux est conçue pour glisser sur du gaz s'écoulant depuis le bord d'attaque jusqu'au bord de fuite, le gaz extérieur à la surface à coussin gazeux étant soumis à la pression atmosphérique, un évidement à pression négative (22) étant pourvu de deux bords latéraux et d'une surface à pression négative d'une profondeur prédéterminée par rapport à la surface à coussin gazeux, la pression dans l'évidement à pression négative étant négative par rapport à la pression ambiante lorsque le gaz traverse, en s'écoulant, la surface à coussin gazeux, les bords latéraux de l'évidement à pression négative (22) étant pourvus de bords d'attaque et de fuite, un moyen de ventilation (42) communiquant entre les bords latéraux de l'évidement à pression négative (22) et les bords latéraux de la pièce coulissante, le moyen de ventilation comprenant des évidements inclinés dans la surface à coussin gazeux, la direction de l'inclinaison étant telle qu'un évidement incliné communique avec le bord latéral de la pièce coulissante en une position qui est plus éloignée du bord d'attaque de la pièce coulissante que la position où l'évidement incliné communique avec le bord latéral de l'évidement à pression négative, caractérisée en ce que le moyen de ventilation se compose d'une paire d'évidements inclinés (42) communiquant entre le bord de fuite de chaque bord latéral de l'évidement à pression négative correspondant et un bord de fuite correspondant des bords latéraux de la pièce coulissante, en ce que les évidements inclinés ont une profondeur égale à la profondeur prédéterminée, et en ce que les évidements inclinés ont une section suffisamment grande pour que, lorsque la pièce coulissante se déplace sur une couche de gaz, du gaz s'écoule à travers les évidements inclinés sans en être empêché de manière significative.

2. Pièce coulissante selon la revendication 1, comprenant une traverse de bord de fuite (44) disposée vers l'arrière des fentes latérales de ventilation (42) sur toute la largeur du corps de la pièce coulissante.

3. Pièce coulissante selon la revendication 2, dans laquelle la face d'attaque de la traverse (44) est inclinée dans les mêmes directions que les fentes latérales de ventilation (42) et selon les mêmes angles.

4. Pièce coulissante selon l'une des revendications précédentes, comprenant une encoche (46) dans chaque traverse latérale (16, 18) de la surface à coussin gazeux, située tout à côté de la fente latérale de ventilation (42) adjacente et en avant de celle-ci pour réduire la pression positive de la surface de la traverse adjacente à la fente latérale de ventilation et en avant de cette dernière.

5. Pièce coulissante à coussin de gaz à chargement automatique comprenant une pièce coulissante (10) présentant des bords d'attaque et de fuite, deux bords latéraux et une surface à coussin gazeux, dans laquelle la surface à coussin gazeux est conçue pour se déplacer sur du gaz s'écoutant depuis le bord d'attaque jusqu'au bord de fuite, le gaz extérieur à la surface à coussin gazeux étant à la pression atmosphérique, un évidement à pression négative (22) étant pourvu de deux bords latéraux et d'une surface à pression négative d'une profondeur prédéterminée par rapport à la surface à coussin gazeux, la pression dans l'évidement à pression négative (22) étant négative par rapport à la pression ambiante lorsque le gaz traverse, en s'écoulant, la surface à coussin gazeux, les bords latéraux de l'évidement à pression négative étant pourvus de bords d'attaque et de fuite, un moyen de ventilation (38) communiquant entre chacun des bords latéraux de l'évidement à pression négative et les bords latéraux de la pièce coulissante, caractérisée en ce que le moyen de ventilation (38) est une rainure terminant le côté de fuite de l'évidement à pression négative (22) et a une profondeur supérieure à la profondeur prédéterminée, en ce que les évidements inclinés ont une section suffisamment grande pour que, lorsque la pièce coulissante se déplace sur une couche de gaz, du gaz s'écoule à travers les évidements inclinés sans en être empêché de manière significative, et en ce qu'une encoche (46) est formée dans chaque traverse latérale (16, 18) de la surface à coussin gazeux tout à côté du moyen de ventilation et en avant de celui-ci pour réduire la pression positive de la surface de la traverse adjacente vers le moyen de ventilation latérale et en avant de ce dernier.

6. Pièce coulissante selon l'une des revendications précédentes, dans laquelle lors de son fonctionnement, elle se déplace sur un coussin de gaz entre la surface à coussin gazeux et une surface plane lui faisant face à une hauteur de vol substantiellement constante, et dans laquelle la hauteur du vol par rapport à ladite surface plane lui faisant face est de l'ordre de $8 \times 10^{-5}$ à $2,8 \times 10^{-4}$ mm ($3 \times 10^{-6}$ à $1,1 \times 10^{-5}$ pouce).

7. Pièce coulissante selon l'une des revendications précédentes, dans laquelle l'évidement à pression négative (22) a, par rapport aux surfaces des traverses (16, 18, 20), une profondeur de $5 \times 10^{-4}$ à $3 \times 10^{-2}$ mm ($2 \times 10^{-5}$ à $1,2 \times 10^{-3}$ pouce).

8. Pièce coulissante selon la revendication 2, ou selon toute revendication rattachée à la revendication 2, dans laquelle la traverse du bord de fuite (44) comprend une pluralité d'éléments transducteurs (32) pour l'adressage de pistes sur la surface plane lui faisant face.

9. Pièce coulissante selon la revendication 5, ou selon toute revendication rattachée à la revendication 5, dans laquelle une traverse de bord de fuite (40) est placée vers l'arrière des fentes latérales de ventilation (38) sur toute la largeur du corps de la pièce coulissante, et comporte une pluralité d'éléments transducteurs (32) pour l'adressage de pistes sur la surface plane lui faisant face.

10. Pièce coulissante selon l'une des revendications 8 ou 9, dans laquelle la traverse de bord de fuite (40; 44) constitue un capteur d'aspérité de surface de proximité sur toute la largeur pour la surface plane lui faisant face.

11. Pièce coulissante selon l'une des revendications précédentes, dans laquelle les zones de pression positive et de pression négative permettent une charge nette sensiblement nulle sur toute la surface du corps.

PRIOR ART

Fig. 1

Fig. 2A

*Fig. 3*

*Fig. 2.*

EP 0 277 414 B1

Fig. 4

EP 0 277 414 B1